# EUROPEAN PATENT APPLICATION

(11) **EP 4 068 819 A1**
(43) Date of publication of application: **05.10.2022**
(21) Application number: 19958683.5
(22) Date of filing: 30.12.2019
(51) Int. Cl.: H04W 8/14, H04W 24/00

(54) **COMMUNICATION METHOD, TERMINAL DEVICE AND NETWORK DEVICE**

(71) Applicant: Huawei Technologies Co., Ltd., Shenzhen, Guangdong 518129 (CN)
(72) Inventor: HU, Xingxing, Shenzhen, Guangdong 518129 (CN); ZHANG, Hongping, Shenzhen, Guangdong 518129 (CN)
(74) Representative: Pfenning, Meinig & Partner mbB
(86) International application number: PCT/CN2019/129983
(87) International publication number: WO 2021/134233

(57) **Abstract**

A communication method, a terminal device, and a network device are disclosed. The communication method includes: A first terminal device receives second configuration information, where the second configuration information is used to indicate to obtain first information used for direct communication between the first terminal device and a second terminal device, and the first information includes at least one of the following: a service sending latency, a service sending throughput, a service receiving throughput, a sent service data amount, a received service data amount, a service data packet loss rate, or control information between the first terminal device and the second terminal device; the first terminal device obtains the first information; and the first terminal device sends the first information to a network device. The foregoing method increases an amount of information obtained from a direct communication system.

## Description

### TECHNICAL FIELD

Embodiments of this application relates to the field of communication technologies, and in particular, to a communication method, a terminal device, and a network device.

### BACKGROUND

With development of communication technologies, a vehicle to everything (vehicle to everything, V2X) communication technology is proposed in recent years. A vehicle to everything system is formed based on a terminal-to-terminal sidelink (sidelink, SL) transmission technology. The vehicle to everything system uses a terminal-to-terminal direct communication mode, and has high spectral efficiency and a low transmission latency. "X" in V2X may represent different communication targets. For example, the V2X may include but is not limited to vehicle to vehicle (vehicle to vehicle, V2V), vehicle to road side infrastructure (vehicle to infrastructure, V2I), vehicle to network (vehicle to network, V2N), and vehicle to pedestrian (vehicle to pedestrian, V2P).

In a V2X communication system, to detect and optimize a problem and a fault in a network, measurement data in the network needs to be collected. However, currently, efficiency of collecting measurement data in the V2X communication system is low.

### SUMMARY

Embodiments of this application provide a communication method, a terminal device, and a network device, to increase an amount of information obtained from a direct communication system.

According to a first aspect, an embodiment of this application provides a communication method, including: A first terminal device receives second configuration information, where the second configuration information is used to indicate to obtain first information used for direct communication between the first terminal device and a second terminal device, and the first information includes at least one of the following: a service sending latency, a service sending throughput, a service receiving throughput, a sent service data amount, a received service data amount, a service data packet loss rate, or control information between the first terminal device and the second terminal device; the first terminal device obtains the first information; and the first terminal device sends the first information to a network device.

According to the communication method provided in the first aspect, related information of a network that supports the direct communication may be obtained by using the second configuration information. The related information may include at least one of the sending latency, the service sending throughput, the service receiving throughput, the sent service data amount, the received service data amount, or the service data packet loss rate for a direct communication service, or may include the control information between the two terminal devices. Various types of obtained information and a large quantity of terminal devices that report the information increase an amount of information in a direct communication system, provide necessary assurance for detecting and optimizing a problem and a fault in the direct communication network, and facilitate network parameter adjustment and new service deployment.

Optionally, in a possible implementation of the first aspect, the first information is specific to a broadcast service, and the method further includes: The first terminal device sends first indication information to the network device, where the first indication information is used to indicate a radio access technology used for the direct communication between the first terminal device and the second terminal device when the first terminal device obtains the first information.

Optionally, in a possible implementation of the first aspect, the method further includes: The first terminal device obtains link information if the first terminal device detects that a radio link failure occurs between the first terminal device and the second terminal device; and the first terminal device sends the link information to the network device.

Optionally, in a possible implementation of the first aspect, that a first terminal device receives second configuration information includes: The first terminal device receives the second configuration information sent by the network device; or the first terminal device receives the second configuration information sent by the second terminal device.

Optionally, in a possible implementation of the first aspect, the method further includes: The first terminal device sends third configuration information to the second terminal device, where the third configuration information is used to indicate the second terminal device to obtain the first information used for the direct communication between the two terminal devices.

Optionally, in a possible implementation of the first aspect, that the first terminal device sends the first information to a network device includes: If a connection status of the first terminal device is a connected state, the first terminal device sends the first information to the network device; and if the connection status of the first terminal device is an idle state, the first terminal device sends the first information to the network device after accessing the network device.

Optionally, in a possible implementation of the first aspect, that the first terminal device sends the first information to the network device after accessing the network device includes: The first terminal device sends second indication information to the network device after accessing the network device, where the second indication information is used to indicate that the first terminal device has the first information; the first terminal device receives reporting request information sent by the network device, where the reporting request information is used to request the first terminal device to send the first information to the network device; and the first terminal device sends the first information to the network device.

According to a second aspect, an embodiment of this application provides a communication method, including: A network device receives first configuration information sent by a core network device or an OAM, where the first configuration information is used to indicate to obtain first information used for direct communication between two terminal devices; the network device determines a first terminal device based on the first configuration information; and the network device sends second configuration information to the first terminal device, where the second configuration information is used to indicate the first terminal device to obtain the first information used for the direct communication between the two terminal devices.

According to a third aspect, an embodiment of this application provides a terminal device, serving as a first terminal device and including: a receiving module, configured to receive second configuration information, where the second configuration information is used to indicate to obtain first information used for direct communication between the first terminal device and a second terminal device, and the first information includes at least one of the following: a service sending latency, a service sending throughput, a service receiving throughput, a sent service data amount, a received service data amount, a service data packet loss rate, or control information between the first terminal device and the second terminal device; an obtaining module, configured to obtain the first information; and a sending module, configured to send the first information to a network device.

Optionally, in a possible implementation of the third aspect, the first information is specific to a broadcast service, and the sending module is further configured to: send first indication information to the network device, where the first indication information is used to indicate a radio access technology used for the direct communication between the first terminal device and the second terminal device when the first terminal device obtains the first information.

Optionally, in a possible implementation of the third aspect, the obtaining module is further configured to obtain link information if it is detected that a radio link failure occurs between the first terminal device and the second terminal device; and the sending module is further configured to send the link information to the network device.

Optionally, in a possible implementation of the third aspect, the receiving module is specifically configured to: receive the second configuration information sent by the network device; or receive the second configuration information sent by the second terminal device.

Optionally, in a possible implementation of the third aspect, the sending module is further configured to: send third configuration information to the second terminal device, where the third configuration information is used to indicate to obtain the first information used for the direct communication between the two terminal devices.

Optionally, in a possible implementation of the third aspect, the sending module is specifically configured to: if a connection status of the first terminal device is a connected state, send the first information to the network device; and if the connection status of the first terminal device is an idle state, send the first information to the network device after accessing the network device.

Optionally, in a possible implementation of the third aspect, the sending module is specifically configured to send second indication information to the network device after accessing the network device, where the second indication information is used to indicate that the first terminal device has the first information; the receiving module is specifically configured to receive reporting request information sent by the network device, where the reporting request information is used to request the first terminal device to send the first information to the network device; and the sending module is specifically configured to send the first information to the network device.

According to a fourth aspect, an embodiment of this application provides a network device, including: a receiving module, configured to receive first configuration information sent by a core network device or an OAM, where the first configuration information is used to indicate to obtain first information used for direct communication between two terminal devices; a determining module, configured to determine a first terminal device based on the first configuration information; and a sending module, configured to send second configuration information to the first terminal device, where the second configuration information is used to indicate the first terminal device to obtain the first information used for the direct communication between the two terminal devices.

According to a fifth aspect, an embodiment of this application provides a device, including a processor and a memory. The processor is configured to invoke a program stored in the memory, to perform the communication method provided in the first aspect or the second aspect.

According to a sixth aspect, an embodiment of this application provides a computer-readable storage medium. The computer-readable storage medium stores instructions. When the instructions are run on a computer or a processor, the communication method provided in the first aspect or the second aspect is implemented.

According to a seventh aspect, an embodiment of this application provides a program product. The program product includes a computer program, the computer program is stored in a readable storage medium, at least one processor of a device can read the computer program from the readable storage medium, and the at least one processor executes the computer program to enable the device to implement the communication method provided in the first aspect or the second aspect.

In the foregoing aspects, optionally, in a possible implementation, the first configuration information, the second configuration information, or the third configuration information is further used to indicate a configuration parameter used when the first information is obtained, and the configuration parameter includes at least one of the following: a communication mode, a resource allocation mode, a measurement range, a connection status, a transmission status, a resource block, or a measurement periodicity, where the communication mode includes unicast communication, groupcast communication, and broadcast communication; the resource allocation mode is used to indicate a mode in which the terminal device obtains a communication resource; the measurement range is used to indicate an area range in which the terminal device is located; the connection status is used to indicate whether the terminal device remains connected to the network device; the transmission status is used to indicate that the terminal device serves as a transmit end or a receive end during service transmission; and the resource block is used to indicate a time-frequency resource used by the terminal device during the service transmission.

Optionally, in a possible implementation, the first information includes current time information and/or current location information of the first terminal device.

Optionally, in a possible implementation, the link information includes any one of the following groups: a first transmit power and a first receive power, where the first transmit power is a power used by the first terminal device to send a signal, the first receive power is a power used by the first terminal device to receive a first signal, and the first signal is sent by the second terminal device; a first transmit power and a second receive power, where the second receive power is a power used by the second terminal device to receive a second signal, and the second signal is sent by the first terminal device; and a second transmit power and a first receive power, where the second transmit power is a power used by the second terminal device to send a signal.

Optionally, in a possible implementation, the link information includes at least one of the following: a moving speed of the first terminal device, a moving speed of the second terminal device, signal quality information of a cell in which the first terminal device is located, and a cell identifier of the cell in which the first terminal device is located.

### BRIEF DESCRIPTION OF DRAWINGS

FIG. 1 is a diagram of an architecture of a communication system to which an embodiment of this application is applicable;
FIG. 2 is a schematic diagram of an architecture for V2X communication;
FIG. 3 is a schematic diagram of a protocol stack of a network device according to an embodiment of this application;
FIG. 4 is a diagram of an architecture of a system to which a scheduling mode is applicable according to an embodiment of this application;
FIG. 5 is a diagram of an architecture of a system to which an autonomous resource selection mode is applicable according to an embodiment of this application;
FIG. 6 is a schematic diagram of a principle of data feedback in groupcast communication according to an embodiment of this application;
FIG. 7 is a flowchart of a communication method according to an embodiment of this application;
FIG. 8 is another flowchart of a communication method according to an embodiment of this application;
FIG. 9 is still another flowchart of a communication method according to an embodiment of this application;
FIG. 10 is a schematic diagram of a structure of a terminal device according to an embodiment of this application;
FIG. 11 is a schematic diagram of a structure of a network device according to an embodiment of this application;
FIG. 12 is a schematic diagram of a structure of a device according to an embodiment of this application;
FIG. 13 is a schematic diagram of another structure of a terminal device according to an embodiment of this application; and
FIG. 14 is a schematic diagram of another structure of a network device according to an embodiment of this application.

### DESCRIPTION OF EMBODIMENTS

The following describes embodiments of this application with reference to the accompanying drawings.

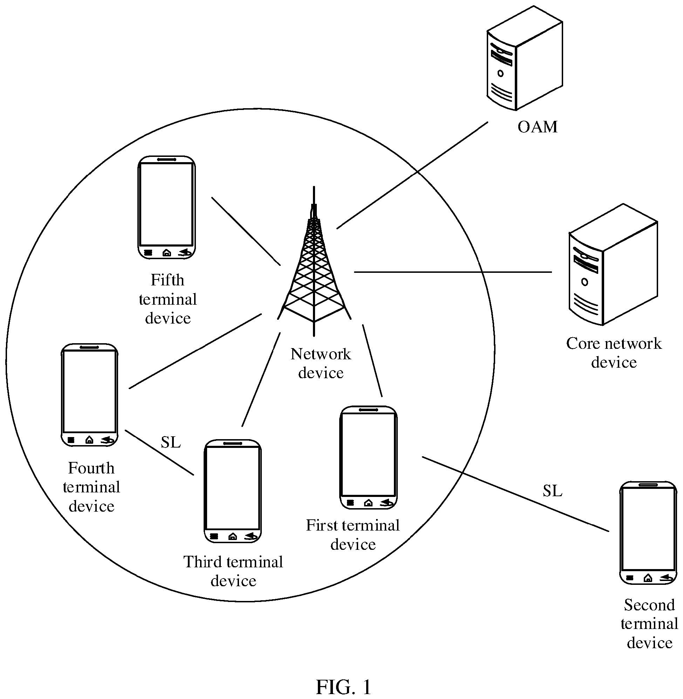

FIG. 1 is a diagram of an architecture of a communication system to which an embodiment of this application is applicable. As shown in FIG. 1, the communication system may include terminal devices and a network device. Optionally, the communication system may further include a core network device and an operation, administration and maintenance (operation, administration and maintenance, OAM) device. Names and quantities of the devices are not limited in embodiments of this application. The network device may communicate with the core network device and the OAM device in a wireless or wired manner. The network device has a specific coverage area, and a terminal device located within the coverage area of the network device may communicate with the network device in a wireless manner. For example, in FIG. 1, the coverage area of the network device includes four terminal devices: a first terminal device, a third terminal device, a fourth terminal device, and a fifth terminal device. For clarity, a wireless communication interface between the network device and the terminal device may be referred to as a first air interface. Optionally, the first air interface may be a Uu interface. Different terminal devices may directly communicate with each other through a wireless communication interface. For example, in FIG. 1, the first terminal device may directly communicate with a second terminal device, and the third terminal device may directly communicate with the fourth terminal device. The communication interface for the direct communication between the different terminal devices may be referred to as a second air interface. Optionally, the second air interface may be an SL, or referred to as a PC5 interface. Optionally, the terminal device may be a terminal device having a V2X communication capability, and is configured to perform V2X communication. The terminal device may be located at a fixed position, or may be mobile.

The following briefly describes the V2X communication.

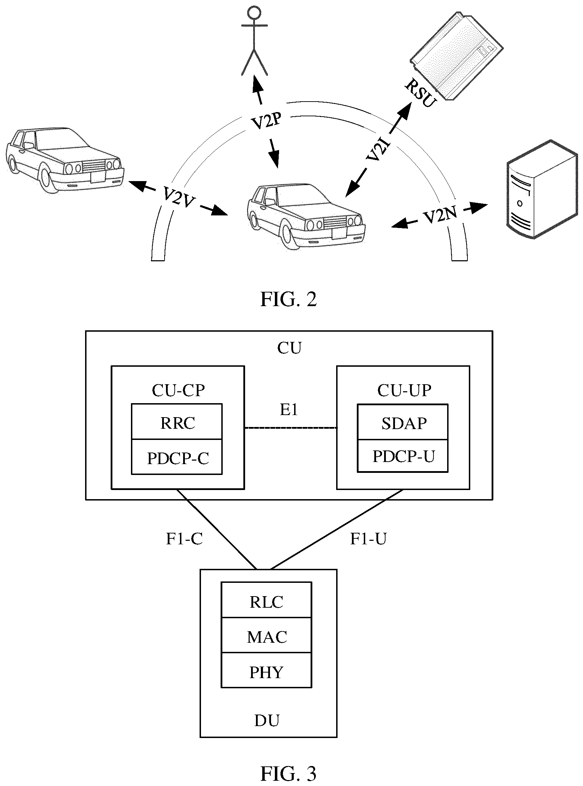

Different from a manner in which communication data is received or sent through a network device in a conventional communication system, V2X uses a terminal-to-terminal direct communication mode, and has higher spectral efficiency and a lower sending latency. For example, FIG. 2 is a schematic diagram of an architecture for V2X communication. As shown in FIG. 2, the V2X communication may include V2V communication, V2P communication, V2I communication, and V2N communication. In the V2X communication, a V2X service may be transmitted through a sidelink (sidelink) or a Uu interface. For example, road side infrastructure may be a road side unit (road side unit, RSU). In actual applications, the V2X can implement typical application scenarios such as information services, traffic safety, and traffic efficiency through all-round connections and efficient information exchange between people, vehicles, roads, and cloud platforms. For example, a vehicle to everything terminal may obtain various information services through the V2I communication and the V2N communication, including traffic signal light information, vehicle information in a nearby area, vehicle navigation, emergency rescue, and an information entertainment service. Information such as a speed, a location, a driving status, and a pedestrian activity of a surrounding vehicle can be obtained in real time through the V2V communication and the V2P communication, and a collision warning function can be implemented by using an intelligent algorithm to avoid a traffic accident.

A radio access technology (radio access technology, RAT) used for communication between a network device and a terminal device is not limited in embodiments of this application. For example, the RAT is a long term evolution (long term evolution, LTE) system, an LTE-Advanced (LTE-Advanced) system, a new radio access technology (new radio access technology, NR) system, a 5G system, an ultra-reliable and low-latency communication (ultra-reliable and low-latency communication, URLLC) system, or a massive machine-type communications (massive machine-type communications, mMTC) system.

A radio access technology used by two terminal devices that directly communicate with each other is not limited in embodiments of this application. For example, in the LTE communication system, the V2X service may be referred to as an LTE V2X service, such as an LTE V2I service or an LTE V2V service. In the NR communication system, the V2X service may be referred to as an NR V2X service, for example, an NR V2I service, an NR V2V service, or an NR V2P service. Optionally, the terminal device may simultaneously support a plurality of radio access technologies. For example, the terminal device supports LTE V2X and NR V2X.

The network device in embodiments of this application is also referred to as a radio access network (radio access network, RAN) device, is a device that connects the terminal device to a wireless network, and may be an evolved NodeB (evolved NodeB, eNB or eNodeB) in LTE, a relay station or an access point, or a base station in a 5G network, for example, a new radio controller (new radio controller, NR controller), a centralized unit (centralized unit), a new radio base station, a remote radio module, a micro base station, a relay (relay), a distributed unit (distributed unit), a transmission and reception point (transmission and reception point, TRP), a transmission point (transmission point, TP), or any other device. This is not limited in embodiments of this application.

In a possible manner, the network device may be a base station (for example, a gNB) having an architecture in which a centralized unit (centralized unit, CU) and a distributed unit (distributed unit, DU) are separated. For example, FIG. 3 is a schematic diagram of a protocol stack of a network device according to an embodiment of this application. The network device may be connected to a core network device (for example, a core network in LTE or a core network in 5G). It may be understood that the base station is divided into the CU and the DU from the perspective of a logical function. The CU and the DU may be physically separated or deployed together. A plurality of DUs may share one CU. One DU may alternatively be connected to a plurality of CUs (not shown in the figure). The CU and the DU may be connected through an interface, for example, an F1 interface. The CU and the DU may be obtained through division based on protocol layers of a wireless network. For example, functions of a radio resource control (radio resource control, RRC) layer, a service data adaptation protocol (service data adaptation protocol, SDAP) layer, and a packet data convergence protocol (packet data convergence protocol, PDCP) layer are deployed on the CU, and functions of a radio link control (radio link control, RLC) layer, a media access control (media access control, MAC) layer, and a physical (physical, PHY) layer are deployed on the DU. It may be understood that processing function division of the CU and the DU based on the protocol layers is merely an example, and there may be other division. For example, the CU or the DU may have functions of more protocol layers through division. For example, the CU or the DU may alternatively have some processing functions of the protocol layers through division. In a design, some functions of the RLC layer and a function of a protocol layer above the RLC layer are deployed on the CU, and a remaining function of the RLC layer and a function of a protocol layer below the RLC layer are deployed on the DU. In another design, functions of the CU or the DU may alternatively be obtained through division based on a service type or another system requirement. For example, division is performed based on a latency, a function whose processing time needs to satisfy a latency requirement is disposed on the DU, and a function whose processing time does not need to satisfy the latency requirement is disposed on the CU. In another design, the CU may alternatively have one or more functions of the core network. One or more CUs may be disposed in a centralized manner or a separated manner. For example, the CUs may be disposed on a network side for ease of centralized management. The DU may have a plurality of radio frequency functions, or the radio frequency functions may be disposed remotely.

Functions of the CU may be implemented by one entity, or may be implemented by different entities. For example, the functions of the CU may be further divided. For example, a control plane (CP) is separated from a user plane (UP); in other words, a CU control plane (CU-CP) and a CU user plane (CU-UP) are obtained. For example, the CU-CP and the CU-UP may be implemented by different function entities. The CU-CP and the CU-UP may be coupled to the DU to jointly implement functions of the base station. In a possible implementation, the CU-CP is responsible for control plane functions, and mainly includes the RRC and a PDCP-C. The PDCP-C is mainly responsible for data encryption and decryption, integrity protection, data transmission, and the like on a control plane. The CU-UP is responsible for user plane functions, and mainly includes the SDAP and a PDCP-U. The SDAP is mainly responsible for processing data of the core network and mapping a data flow (flow) to a bearer. The PDCP-U is mainly responsible for encryption and decryption, integrity protection, header compression, serial number maintenance, data transmission, and the like on a data plane. The CU-CP is connected to the CU-UP through an E1 interface. The CU-CP indicates that the gNB is connected to the core network through an Ng interface. The CU-CP is connected to the DU through F1-C (the control plane). The CU-UP is connected to the DU through F1-U (the user plane). Certainly, in another possible implementation, the PDCP-C is on the CU-UP.

The terminal device in embodiments of this application may be a terminal device having a direct communication capability, for example, a terminal device having a V2X communication capability, or a device providing a voice and/or data connectivity for a user, for example, a handheld device, an in-vehicle device, or a road side unit having a wireless connection function. A common terminal device includes a mobile phone, a tablet, a notebook computer, a palmtop computer, a mobile internet device (mobile internet device, MID), and a wearable device such as a smartwatch, a smart band, or a pedometer.

The following describes concepts related to embodiments of this application.

### 1. Out of coverage (out of coverage, OOC) and in coverage (in coverage, IC)

In a V2X system, communication performed through an SL may be referred to as a V2X sidelink communication mode. In this communication mode, a terminal device may work in a scenario with network coverage, which is referred to as an in-coverage scenario; or a terminal device may work in a scenario without network coverage, which is referred to as an out-of-coverage scenario. For example, in FIG. 1, the second terminal device is in an out-of-coverage scenario, and the first terminal device, the third terminal device, and the fourth terminal device are all in an in-coverage scenario.

In an in-coverage scenario, a connection may be established or maintained between a terminal device and a network device, and the terminal device is in an RRC connected state; or no RRC connection is established between the terminal device and the network device (for example, the terminal device is in an RRC idle state RRC_IDLE or an RRC inactive state RRC_INACTIVE). In an out-of-coverage scenario, no RRC connection is established between a terminal device and a network device.

### 2. Resource allocation mode

In a V2X sidelink communication mode, a mode in which a terminal device obtains a communication resource used for direct communication may include a scheduling mode and an autonomous resource selection mode.

In the scheduling mode, the terminal device is in an RRC connected state, and a transmission resource used by the terminal device to transmit a V2X service through a sidelink is allocated by a network device. In the autonomous resource selection mode, a network device configures a V2X sidelink resource pool. Each time the terminal device transmits a V2X service, the terminal device may obtain a communication resource from the resource pool configured by the network device, without needing scheduling performed by the network device. The scheduling mode is applicable to an in-coverage scenario. The autonomous resource selection mode is applicable to an in-coverage scenario and an out-of-coverage scenario. In the out-of-coverage scenario, a resource pool may be obtained through preconfiguration.

Optionally, in an NR V2X system, the scheduling mode may be referred to as a mode 1 (mode 1) or a mode 3 (mode 3), and the autonomous resource selection mode may be referred to as a mode 2 (mode 2) or a mode 4 (mode 4).

### 3. Scheduling mode

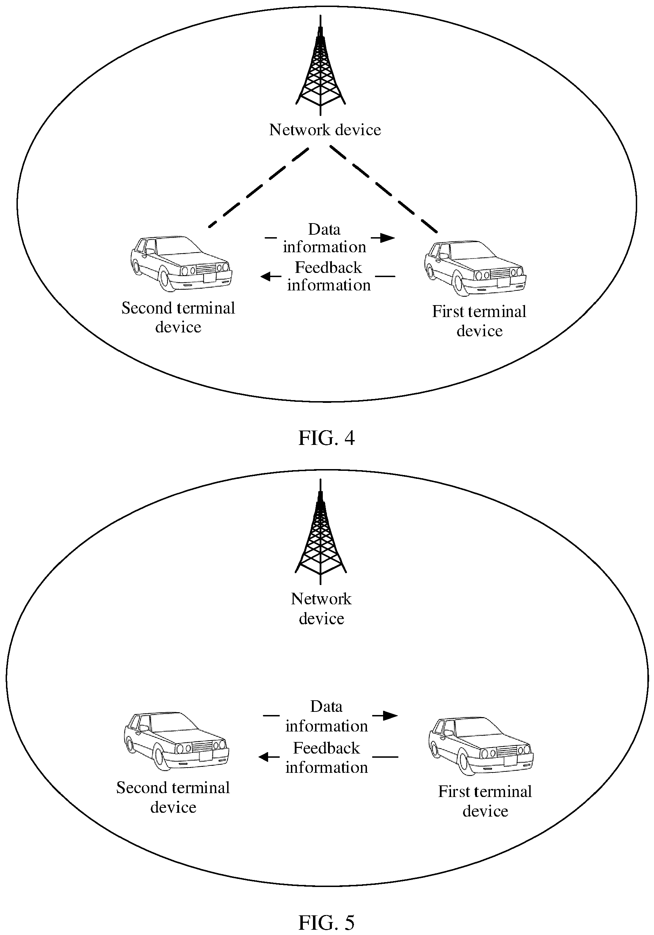

FIG. 4 is a diagram of an architecture of a system to which a scheduling mode is applicable according to an embodiment of this application.

A transmission resource between a first terminal device and a second terminal device is allocated by a network device. The first terminal device and/or the second terminal device are/is in an RRC connected state. The terminal device requests a resource from the network device, and the network device allocates control and data resources on a V2X direct communication link. The first terminal device and the second terminal device transmit data on an SL based on the resources allocated by the network device. Optionally, the network device may allocate a resource for single transmission to the first terminal device and the second terminal device. Optionally, the scheduling mode may include semi-persistent scheduling (semi-persistent scheduling, SPS), and the network device may allocate a semi-persistent transmission resource to the first terminal device and the second terminal device.

### 4. Autonomous resource selection mode

FIG. 5 is a diagram of an architecture of a system to which an autonomous resource selection mode is applicable according to an embodiment of this application.

A first terminal device and a second terminal device may select one resource from a resource pool configured by the network device to transmit data. Specifically, the first terminal device and the second terminal device may select the transmission resource from the resource pool through monitoring, or select the transmission resource from the resource pool through random selection. A manner of selecting the transmission resource by the first terminal device and the second terminal device may be determined based on an actual situation, and is not limited herein.

Optionally, the resource in the resource pool may include but is not limited to at least one of a time domain resource, a frequency domain resource, and a time-frequency domain resource. For example, the resource may include a resource block (resource block, RB). In V2X, an RB may also be referred to as an SL-RB.

### 5. Communication mode

The communication mode may include unicast communication, groupcast communication, and broadcast communication.

A unicast link may be formed between two terminal devices, as shown in FIG. 4 and FIG. 5. Groupcast is also referred to as multicast. In the groupcast communication, at least two terminal devices may form a communication group. In the communication group, one terminal device may send data to another terminal device in the communication group. In the broadcast communication, one terminal device may send data to all other terminal devices in a network.

### 6. Data feedback mechanism

To improve transmission reliability, a feedback channel may be introduced into an SL. The data feedback mechanism is applicable to unicast communication and groupcast communication.

Refer to FIG. 4 and FIG. 5. In the unicast communication, a second terminal device sends data to a first terminal device, and the first terminal device sends feedback information to the second terminal device based on a detection result of the received data. Correspondingly, the second terminal device determines, based on the received feedback information of the first terminal device, whether to retransmit the data to the first terminal device.

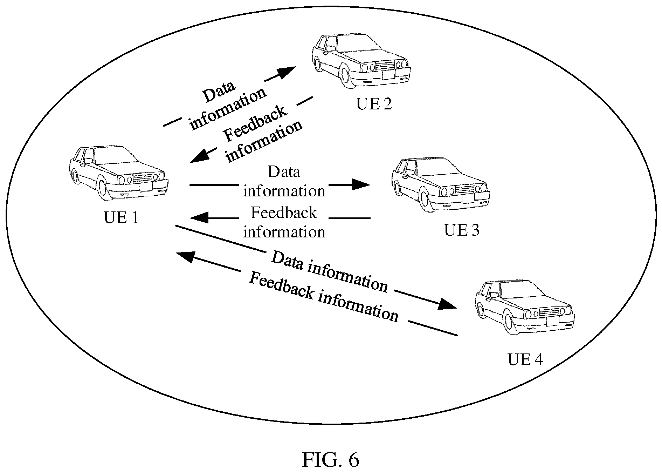

In the groupcast communication, for example, refer to FIG. 6. In FIG. 6, a communication group may include four terminal devices, which are respectively UE 1 to UE 4. When the UE 1 sends data, the UE 2 to the UE 4 in the communication group send feedback information to the UE 1 based on a data receiving status.

Optionally, the feedback information may be hybrid automatic repeat request acknowledgment (hybrid automatic repeat request acknowledgment, HARQ ACK) information or HARQ negative acknowledgment (HARQ NACK) information.

In a conventional technology, measurement information that can be obtained by a V2X communication system and that is related to direct communication between terminal devices is insufficient, and a requirement for detecting and optimizing a problem and a fault in a V2X communication network cannot be satisfied.

For the foregoing technical problem, embodiments of this application provide a communication method. For terminal devices under direct communication, an amount of obtained information about a communication system that supports the direct communication is increased by collecting richer information and more information about the terminal devices. This provides necessary assurance for detecting and optimizing the problem and the fault in the direct communication network, and facilitates network parameter adjustment and new service deployment.

By using specific embodiments, the following describes in detail the technical solutions of this application and how to resolve the foregoing technical problem by using the technical solutions of this application. The following several specific embodiments may be combined with each other, and a same or similar concept or process may not be described repeatedly in some embodiments.

It should be noted that in embodiments of this application, "at least one" may be alternatively described as one or more, and "a plurality of' may be two, three, four, or more. This is not limited in embodiments of this application.

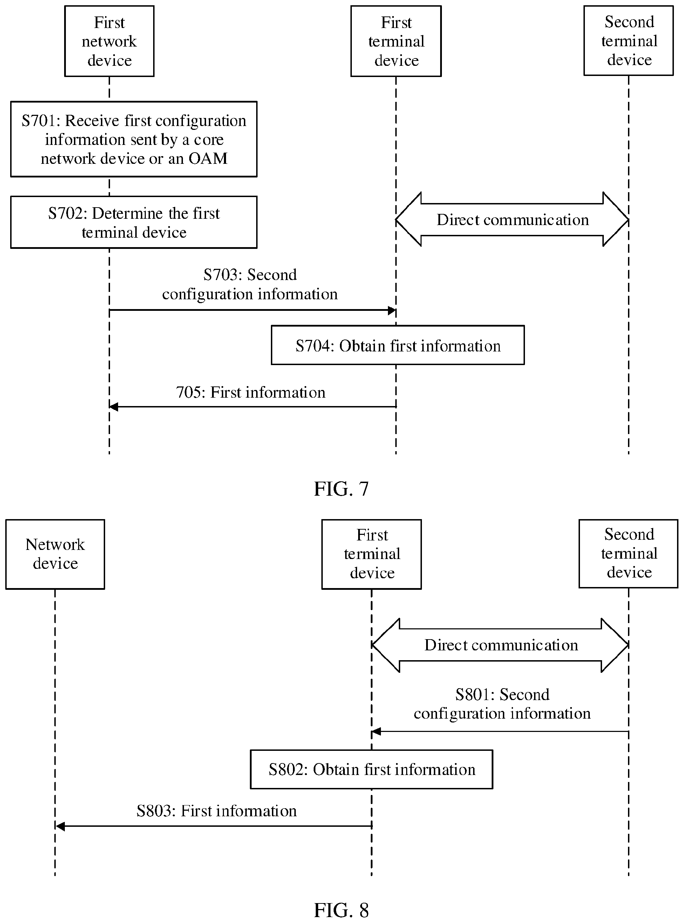

FIG. 7 is a flowchart of a communication method according to an embodiment of this application. The communication method provided in this embodiment is performed by a first network device and a first terminal device. As shown in FIG. 7, the communication method provided in this embodiment may include the following steps.

S701: The first network device receives first configuration information sent by a core network device or an OAM.

The first configuration information is used to indicate to obtain first information used for direct communication between two terminal devices.

Optionally, the first information may include at least one of the following: a service sending latency, a service sending throughput, a service receiving throughput, a sent service data amount, a received service data amount, a service data packet loss rate, or control information between the first terminal device and a second terminal device.

Specifically, for ease of description, in embodiments of this application, the two terminal devices that directly communicate with each other may be referred to as the first terminal device and the second terminal device. In a process in which the first terminal device directly communicates with the second terminal device, the first terminal device may serve as a sender, and correspondingly, the second terminal device serves as a receiver; or the second terminal device may serve as a sender, and correspondingly, the first terminal device serves as a receiver. The first network device may receive the first configuration information sent by the core network device or the OAM, to obtain related information of a network that supports the direct communication. The service sending latency, the service sending throughput, the service receiving throughput, the sent service data amount, the received service data amount, and the service data packet loss rate are related information for a service between the first terminal device and the second terminal device. The control information between the first terminal device and the second terminal device may include but is not limited to signaling exchanged when the first terminal device directly communicates with the second terminal device (for example, an RRC message, such as a sidelink reconfiguration message RRCReconfigurationSidelink, a sidelink reconfiguration complete message RRCReconfigurationCompleteSidelink, a sidelink reconfiguration failure message RRCReconfigurationFailureSidelink, a sidelink capability request message UECapabilityEnquirySidelink, sidelink capability information UECapabilityInformationSidelink, and a sidelink master information block MasterInformationBlockSidelink, where the RRCReconfigurationSidelink is used by a transmit end that sends the message to indicate a receive end to reconfigure access stratum configuration information of a sidelink, the RRCReconfigurationCompleteSidelink is used to acknowledge that the reconfiguration indicated by the received RRCReconfigurationSidelink is correctly completed, the RRCReconfigurationFailureSidelink is used to notify that the reconfiguration indicated by the received RRCReconfigurationSidelink is not correctly completed, the UECapabilityEnquirySidelink is used to request capability information of the terminal device on the sidelink, the UECapabilityInformationSidelink is used to transmit the capability information of the UE on the sidelink, and the MasterInformationBlockSidelink is used to transmit system information of the sidelink). Optionally, the control information between the first terminal device and the second terminal device may alternatively be a logged RRC message corresponding to an event, or a corresponding RRC message logged only after an event is triggered, for example, the RRCReconfigurationFailureSidelink and corresponding sidelink configuration information before the failure are logged (for example, content that is in the RRCReconfigurationSidelink message and that corresponds to the RRCReconfigurationFailureSidelink, or sidelink configuration information obtained by combining the RRCReconfigurationSidelink message corresponding to the RRCReconfigurationFailureSidelink and sidelink configuration information that has taken effect previously, where for example, the content that is in the RRCReconfigurationSidelink message and that corresponds to the RRCReconfigurationFailureSidelink is only some content modified or enhanced for the sidelink configuration information that has taken effect previously). The control information between the first terminal device and the second terminal device may be used for problem locating, for example, user complaint and network optimization, or may be used for network test analysis.

Optionally, the first configuration information may further include first identification information, and the first identification information is used to indicate to obtain the first information used for the direct communication between the two terminal devices.

Specifically, refer to the communication system shown in FIG. 1. The first network device and the terminal device are related to a conventional communication network, and different terminal devices are related to the network that supports the direct communication. The first network device may receive a plurality of messages, and the messages are separately used to obtain information about different communication networks. The first identification information is carried in the first configuration information, to explicitly indicate that the first information used for the direct communication between the two terminal devices needs to be obtained. This helps the first network device correctly obtain the information.

An implementation of the first identification information is not limited in this embodiment. Optionally, the first identification information may be a newly added field in the first configuration information, or may be a reserved field in the first configuration information.

Optionally, the first configuration information may be carried in an initial context setup request (initial context setup request) message, a handover request (handover request) message, or a trace start (trace start) message. Optionally, for the control information between the first terminal device and the second terminal device, a sidelink tracing indication may be carried in tracing interface information elements Interfaces To Trace in these messages, that is, sidelink tracing is added to a tracing (trace) procedure.

S702: The first network device determines the first terminal device.

Optionally, when the first network device receives the first configuration information from a core network, the core network sends the first configuration information through an interface that corresponds to the first terminal device and that is between the first network device and the core network device, and the first network device directly determines the first terminal device. In other words, the first configuration information sent by the core network to the first network device is specific to the first terminal device.

Optionally, when the first network device receives the first configuration information from the OAM, the first network device determines the first terminal device based on content in the first configuration information. For example, the first configuration information further carries information about an area, and the first network device determines that the terminal device is the first terminal device, only when a serving cell corresponding to a terminal device that communicates with the first network device belongs to the area. For example, the first network device may determine the first terminal device based on a capability of a terminal device. Specifically, a terminal device, for example, the first terminal device, the third terminal device, or the fourth terminal device in FIG. 1, that communicates with the first network device may support the direct communication; or a terminal device, for example, the fifth terminal device in FIG. 1, that communicates with the first network device may not support the direct communication. The first network device may determine the first terminal device based on the first configuration information and a capability of each terminal device. Optionally, the first terminal device is a terminal device connected to the first network device.

S703: The first network device sends second configuration information to the first terminal device.

Correspondingly, the first terminal device receives the second configuration information.

The second configuration information is used to indicate the first terminal device to obtain the first information used for the direct communication between the first terminal device and the second terminal device. Optionally, the first configuration information may further include the first identification information, and the first identification information is used to indicate to obtain the first information used for the direct communication between the first terminal device and the second terminal device. The second configuration information may be the same as or different from the first configuration information. For example, the second configuration information includes only some information in the first configuration information.

Optionally, the service sending latency, the service sending throughput, the service receiving throughput, the sent service data amount, the received service data amount, and the service data packet loss rate may be obtained for different sidelink radio bearers (sidelink radio bearers, SLRBs). The second configuration information may indicate sidelink radio bearers for which the information is to be obtained.

Optionally, the second configuration information may be carried in an RRC message (for example, a logged measurement configuration message loggedMeasurementConfiguration or an RRC reconfiguration message RRCReconfiguration).

S704: The first terminal device obtains the first information.

Specifically, after receiving the second configuration information sent by the first network device, the first terminal device obtains the first information based on the second configuration information.

Optionally, the service sending latency, the service sending throughput, the service receiving throughput, the sent service data amount, the received service data amount, and the service data packet loss rate may be obtained for different SLRBs. The first information may further indicate sidelink radio bearers to which the information corresponds. Further, the first information may further include a mapping relationship between a PC5 5G quality of service identifier (5G QoS Identifier, 5QI) and a sidelink radio bearer.

S705: The first terminal device sends the first information to a second network device.

Correspondingly, the second network device receives the first information sent by the first terminal device.

The second network device and the first network device may be a same network device, or may be different network devices. For example, FIG. 7 shows a scenario in which the second network device and the first network device are a same network device.

Optionally, that the first terminal device sends the first information to a second network device in S705 may include:
If a connection status of the first terminal device is a connected state, the first terminal device sends the first information to the second network device; and
if the connection status of the first terminal device is an idle state, the first terminal device sends the first information to the second network device after accessing the second network device.

Specifically, the first terminal device obtains the first information. If the current connection status of the first terminal device is the connected state, and the first terminal device is connected to the second network device, the first terminal device may send the first information to the second network device through a communication link between the first terminal device and the second network device. If the current connection status of the first terminal device is the idle state, and the first terminal device is not connected to any network device, the first terminal device may store the first information, and subsequently, after accessing the second network device, the first terminal device sends the first information to the second network device.

The following describes application scenarios of this embodiment by using examples.

Optionally, in a scenario, the first network device and the second network device are a same network device. The first terminal device is connected to the first network device. The first terminal device receives the second configuration information sent by the first network device, and obtains the first information based on the second configuration information. The first terminal device may send the first information to the first network device.

Optionally, in another scenario, the first network device and the second network device are a same network device. The first terminal device is connected to the first network device. The first terminal device receives the second configuration information sent by the first network device, and obtains the first information based on the second configuration information. Then, due to a radio link failure or another reason, the first terminal device disconnects from the first network device, and the connection status of the first terminal device changes from the connected state to the idle state. Then, the first terminal device accesses the first network device again, and sends the first information to the first network device.

Optionally, in still another scenario, the first network device and the second network device are different network devices. The first terminal device is connected to the first network device. The first terminal device receives the second configuration information sent by the first network device, and the first terminal device obtains the first information based on the second configuration information. Then, the first terminal device enters the idle state. Subsequently, the first terminal device accesses the second network device, and sends the first information to the second network device.

Optionally, in still another scenario, the first network device and the second network device are different network devices. The first terminal device is connected to the first network device. The first terminal device receives the second configuration information sent by the first network device. Then, the first terminal device enters the idle state, and the first terminal device obtains the first information based on the second configuration information. Subsequently, the first terminal device accesses the second network device, and sends the first information to the second network device.

Optionally, in still another scenario, the first network device and the second network device are different network devices. The first terminal device is connected to the first network device. The first terminal device receives the second configuration information sent by the first network device, and the first terminal device obtains the first information based on the second configuration information. Subsequently, the first terminal device accesses the second network device, and sends the first information to the second network device. Optionally, after accessing the second network device, the first terminal device continues to obtain the first information, and then sends the first information to the second network device.

Optionally, that the first terminal device sends the first information to the second network device after accessing the second network device, or the first terminal device sends the first information to the second network device may include:

The first terminal device sends second indication information to the second network device after accessing the second network device, where the second indication information is used to indicate that the first terminal device has the first information.

The first terminal device receives reporting request information sent by the second network device, where the reporting request information is used to request the first terminal device to send the first information to the second network device.

The first terminal device sends the first information to the second network device.

Optionally, the second indication information and/or the reporting request information may be carried in an RRC message.

An implementation of the second indication information is not limited in this embodiment. For example, the second indication information may be a newly added field or a reserved field in the RRC message.

Optionally, the first information may include second identification information, and the second identification information is used to indicate that the first information is information used for the direct communication between the first terminal device and the second terminal device.

The second identification information is similar to the first identification information. For details, refer to related descriptions of the first identification information. Details are not described herein again.

It can be learned that, according to the communication method provided in this embodiment, the core network device, the OAM, or the network device may indicate, by using the configuration information, to obtain related information of the network that supports the direct communication. The related information may include at least one of the sending latency, the service sending throughput, the service receiving throughput, the sent service data amount, the received service data amount, or the service data packet loss rate for the direct communication service, or may include the control information between the two terminal devices. The various types of information obtained from the direct communication network and a large quantity of terminal devices that report the information increase an amount of information in the direct communication system, provide necessary assurance for detecting and optimizing a problem and a fault in the direct communication network, and facilitate network parameter adjustment and new service deployment.

Optionally, after the first terminal device receives the second configuration information, the method may further include:
The first terminal device sends third configuration information to the second terminal device Information.

The third configuration information is used to indicate the second terminal device to obtain the first information used for the direct communication between the two terminal devices. Optionally, the first information may include at least one of the following: the service sending latency, the service sending throughput, the service receiving throughput, the sent service data amount, the received service data amount, the service data packet loss rate, or the control information between the first terminal device and the second terminal device. Optionally, the third configuration information may be the same as or different from the second configuration information. For example, the third configuration information includes only some information in the second configuration information.

Optionally, the third configuration information may further include third identification information, and the third identification information is used to indicate to obtain the first information used for the direct communication between the two terminal devices.

The second terminal device may be connected to the network device, or may not be connected to the network device. This is not limited in this embodiment of this application.

The second terminal device may be in an out-of-coverage (OOC) scenario, or may be in an in-coverage (IC) scenario. This is not limited in this embodiment of this application.

The third configuration information is sent to the second terminal device, so that the second terminal device can obtain, based on the third configuration information, the information used for the direct communication between the first terminal device and the second terminal device, so that an information amount of the network is further increased.

Optionally, after the second terminal device obtains the first information, the second terminal device may send the first information to the first terminal device, and the first terminal device sends the first information to the network device.

Optionally, after the second terminal device obtains the first information, the second terminal device may send the first information to the network device.

Optionally, if the first information is specific to a broadcast service, the method provided in this embodiment may further include:
The first terminal device sends first indication information to the second network device, where the first indication information is used to indicate a radio access technology used for the direct communication between the first terminal device and the second terminal device when the first terminal device obtains the first information.

An example is used for description. Both the first terminal device and the second terminal device may support LTE V2X and NR V2X. For broadcast communication, the radio access technology used between the first terminal device and the second terminal device may be the LTE V2X, or may be the NR V2X. Therefore, specific to the broadcast service, the first terminal device may further send the first indication information to the second network device, to clearly indicate, by using the first indication information, the radio access technology used for the direct communication between the first terminal device and the second terminal device when the first terminal device obtains the first information. This improves accuracy of the obtained information, and helps a network side perform targeted optimization.

FIG. 8 is another flowchart of a communication method according to an embodiment of this application. The communication method provided in this embodiment is performed by a network device and a first terminal device. As shown in FIG. 8, the communication method provided in this embodiment may include the following steps.

S801: The first terminal device receives second configuration information sent by a second terminal device.

The second terminal device is a terminal device that directly communicates with the first terminal device.

The second configuration information is used to indicate to obtain first information used for direct communication between the first terminal device and the second terminal device.

It should be noted that for the second configuration information in S801, refer to related descriptions of the third configuration information in the embodiment shown in FIG. 7. Principles are similar, and details are not described herein again. A difference lies in that in the embodiment shown in FIG. 7, the first terminal device serves as a sender to send the third configuration information to the second terminal device. However, in this embodiment, the first terminal device serves as a receiver to receive the second configuration information sent by the second terminal device.

Optionally, the first information may include at least one of the following: a service sending latency, a service sending throughput, a service receiving throughput, a sent service data amount, a received service data amount, a service data packet loss rate, or control information between the first terminal device and the second terminal device.

S802: The first terminal device obtains the first information.

S803: The first terminal device sends the first information to the network device.

The network device in this embodiment is similar to the second network device in the embodiment shown in FIG. 7, S802 is similar to S704, and S803 is similar to S705. For the first information, refer to the descriptions in the embodiment shown in FIG. 7. Details are not described herein again.

Optionally, S803 may alternatively be: After the first terminal device obtains the first information, the first terminal device sends the first information to the second terminal device. The second terminal device sends the first information to the network device.

It should be noted that the communication method provided in this embodiment and the communication method provided in the embodiment shown in FIG. 7 may be mutually combined.

In the embodiments shown in FIG. 7 and FIG. 8, optionally, the first configuration information, the second configuration information, or the third configuration information is further used to indicate a configuration parameter used when the first information is obtained. The configuration parameter includes but is not limited to at least one of the following: a communication mode, a resource allocation mode, a measurement range, a connection status, a transmission status, a resource block, or a measurement periodicity.

The communication mode may include unicast communication, groupcast communication, and broadcast communication. In the communication mode, the terminal device obtains the first information.

The resource allocation mode is used to indicate a mode in which the terminal device obtains a communication resource. The communication resource is a communication resource used between the two terminal devices that directly communicate with each other. In the resource allocation mode, the terminal device obtains the first information.

The measurement range is used to indicate an area range in which the terminal device is located. Optionally, the measurement range may include but is not limited to a cell range, a tracking area code (tracking area code, TAC) range, and a tracking area identity (tracking area identity, TAI) range.

The connection status is used to indicate whether the terminal device remains connected to the network device.

The transmission status is used to indicate that the terminal device serves as a transmit end or a receive end during service transmission.

The resource block is used to indicate a time-frequency resource used by the terminal device during the service transmission.

The following describes configuration information by using examples. The configuration information includes the first configuration information, the second configuration information, or the third configuration information.

In an example, the first information includes the service sending latency and the service sending throughput. Configuration parameters of the service sending latency include: The communication mode is the unicast communication, and the measurement range is the cell range. Configuration parameters of the service sending throughput include: The communication mode is the unicast communication, and the measurement range is the cell range. The configuration information is used to indicate to obtain the service sending latency and the service sending throughput that are of direct communication between two terminal devices that perform unicast communication within the cell range.

In another example, the first information includes the service sending latency and the service sending throughput. Configuration parameters of the service sending latency include: The communication mode is the unicast communication, and the measurement range is the cell range. Configuration parameters of the service sending throughput include: The communication mode is the groupcast communication, the measurement range is the cell range, and the resource allocation mode is a scheduling mode. The configuration information is used to indicate to obtain the service sending latency of direct communication between two terminal devices that perform unicast communication in the cell range, and obtain the service sending throughput of direct communication between terminal devices that perform groupcast communication and that obtain a direct communication resource in the scheduling mode in the cell range.

In still another example, the first information includes the control information between the first terminal device and the second terminal device, and a configuration parameter corresponding to the first information includes: The measurement range is the cell range. The configuration information is used to indicate to obtain the control information for the direct communication between the two terminal devices within the cell range in the measurement range in the configuration parameter.

It should be noted that a configuration parameter corresponding to each piece of information included in the first information is not limited in this embodiment, and quantities and values of configuration parameters corresponding to different pieces of information in the first information may be the same or may be different.

The following describes the first information in the embodiments shown in FIG. 7 and FIG. 8.

### 1. Service sending latency

The service sending latency is a time interval between a time point at which a terminal device, serving as a transmit end, receives a data packet and a time point at which the terminal device, serving as the transmit end, acknowledges that the data packet is successfully sent.

That the terminal device serving as the transmit end acknowledges that the data packet is successfully sent may also be understood as that the terminal device serving as the transmit end acknowledges that the data packet does not need to be retransmitted. That the terminal device serving as the transmit end receives the data packet may be understood as that a wireless protocol layer of the terminal device serving as the transmit end receives the data packet from an upper layer. For example, an SDAP layer or a PDCP layer receives the data packet from an upper layer.

Optionally, when a resource allocation mode is a scheduling mode, the service sending latency may include duration in which the terminal device requests a resource from a network device.

In different communication modes, methods for determining that the terminal device acknowledges that the data packet is successfully sent are different. The following provides descriptions with reference to different communication modes and different data feedback mechanisms.

### (1) Unicast communication

Refer to FIG. 4 or FIG. 5. In the unicast communication, only one receiver terminal feeds back information.

Optionally, in an implementation, the receiver terminal may feed back an ACK or a NACK. If the receiver terminal receives a data packet correctly, the receiver terminal feeds back the ACK; or if the receiver terminal fails to receive a data packet, the receiver terminal feeds back a NACK. Correspondingly, if a sender terminal receives the ACK fed back by the receiver terminal, the sender terminal acknowledges that the data packet is successfully sent; or if the sender terminal receives the NACK fed back by the receiver terminal, the sender terminal acknowledges that the data packet is not successfully sent and needs to be retransmitted. In this data feedback mechanism, that the sender terminal acknowledges that the data packet is successfully sent is that the sender terminal receives the ACK fed back by the receiver terminal.

Optionally, in another implementation, the receiver terminal feeds back only a NACK. If the receiver terminal does not receive a data packet correctly, the receiver terminal feeds back the NACK. Correspondingly, if a sender terminal receives the NACK fed back by the receiver terminal, the sender terminal acknowledges that the data packet is not successfully sent and needs to be retransmitted. In this data feedback mechanism, that the sender terminal acknowledges that the data packet is successfully sent is that the sender terminal does not receive the NACK fed back by the receiver terminal.

It should be noted that the data feedback mechanism in the unicast communication is not limited in this embodiment, and any data feedback mechanism in existing unicast communication may be used.

### (2) Groupcast communication

Refer to FIG. 6. In the groupcast communication, a plurality of receiver terminals feed back information.

Optionally, in an implementation, the receiver terminal feeds back only a NACK. Correspondingly, provided that a sender terminal detects the NACK, the sender terminal determines that a data packet needs to be retransmitted. The sender terminal acknowledges that a data packet is successfully sent is that the sender terminal does not receive the NACK fed back by the receiver terminal in the groupcast communication. Optionally, all receiver terminals that need to send NACKs may send feedback information by using a same transmission resource. In one manner, when a quantity of receiver terminals that feed back the NACKs is less than or equal to a fifth preset value, the sender terminal determines that the data packet is sent successfully. In another manner, when a quantity of receiver terminals that feed back the NACKs is greater than or equal to a sixth preset value, the sender terminal determines that the data packet is not sent successfully and needs to be retransmitted.

Optionally, in another implementation, the receiver terminal may feed back an ACK or a NACK. If a receiver terminal in a communication group correctly receives a data packet, the receiver terminal sends an ACK; or if the receiver terminal does not correctly receive a data packet, the receiver terminal sends a NACK. Correspondingly, a sender terminal may determine, based on the feedback information sent by the receiver terminal in the communication group, whether the data packet is successfully sent. Optionally, in one manner, when all receiver terminals feed back ACKs, the sender terminal determines that the data packet is sent successfully. Optionally, in another manner, when a quantity of receiver terminals that feed back the ACKs is greater than or equal to a first preset value, the sender terminal determines that the data packet is sent successfully. In still another manner, when a quantity of receiver terminals that feed back the ACKs is smaller than or equal to a second preset value, the sender terminal determines that the data packet is not sent successfully and needs to be retransmitted. In still another manner, when a quantity of receiver terminals that feed back NACKs is less than or equal to a third preset value, the sender terminal determines that the data packet is sent successfully. In still another manner, when a quantity of receiver terminals that feed back NACKs is greater than or equal to a fourth preset value, the sender terminal determines that the data packet is not sent successfully and needs to be retransmitted. Optionally, different receiver terminals may send feedback information by using different transmission resources. Optionally, the different transmission resources include at least one of different time domain resources, different frequency domain resources, or different code domain resources.

It should be noted that a data feedback mechanism in the groupcast communication is not limited in this embodiment, and any data feedback mechanism in existing groupcast communication may be used.

### 2. Service sending throughput

The service sending throughput is a ratio of a size of a data packet successfully sent by a terminal device in a first preset time period to the first preset time period.

### 3. Service receiving throughput

The service receiving throughput is a ratio of a size of a data packet successfully received by a terminal device in a second preset time period to the second preset time period.

### 4. Sent service data amount

The sent service data amount is a size of a data packet successfully sent by a terminal device in a third preset time period.

### 5. Received service data amount

The received service data amount is a size of a data packet successfully received by a terminal device in a fourth preset time period.

### 6. Service data packet loss rate

A data packet sending success rate is a ratio of a size of a data packet that is successfully sent by a terminal device within the fifth preset time period and that satisfies a service sending latency requirement to a size of a data packet sent within the fifth preset time period.

That the successfully sent data packet satisfies the service sending latency may also be understood as that the data packet is successfully sent within a required sending latency.

It should be noted that in the foregoing information, meanings of successfully sending the data packet are the same. For details, refer to related descriptions in the service sending latency.

Optionally, in the service receiving throughput and the received service data amount, successfully received data packets are different data packets. For example, if UE 1 sequentially receives a data packet 1, a data packet 2, and the data packet 1, the UE 1 successfully receives two data packets: the data packet 1 and the data packet 2.

It should be noted that values of the first preset time period, the second preset time period, the third preset time period, the fourth preset time period, and the fifth preset time period are not limited in this embodiment.

Optionally, in the first information, the data packet may be an SDAP layer data packet or a PDCP layer data packet. To be specific, the service sending latency, the service sending throughput, the service receiving throughput, the sent service data amount, the received service data amount, or the service data packet loss rate is collected at an SDAP layer or a PDCP layer.

Optionally, the first information may further include current time information and/or current location information of the first terminal device.

It should be noted that, in embodiments of this application, first information used for direct communication between two terminal devices is related to a terminal device that obtains the first information and configuration information received by the terminal device. If terminal devices are different and received configuration information is different, content included in the first information used for the direct communication between the two terminal devices may be different. An example is used for description. The first terminal device receives the second configuration information, and may obtain the first information used for the direct communication between the two terminal devices based on the second configuration information, where the first information may include the service sending latency and the service sending throughput. The second terminal device receives the third configuration information sent by the first terminal device, and may obtain the first information used for the direct communication between the two terminal devices based on the third configuration information, where the first information may include the sent service data amount and the service data packet loss rate.

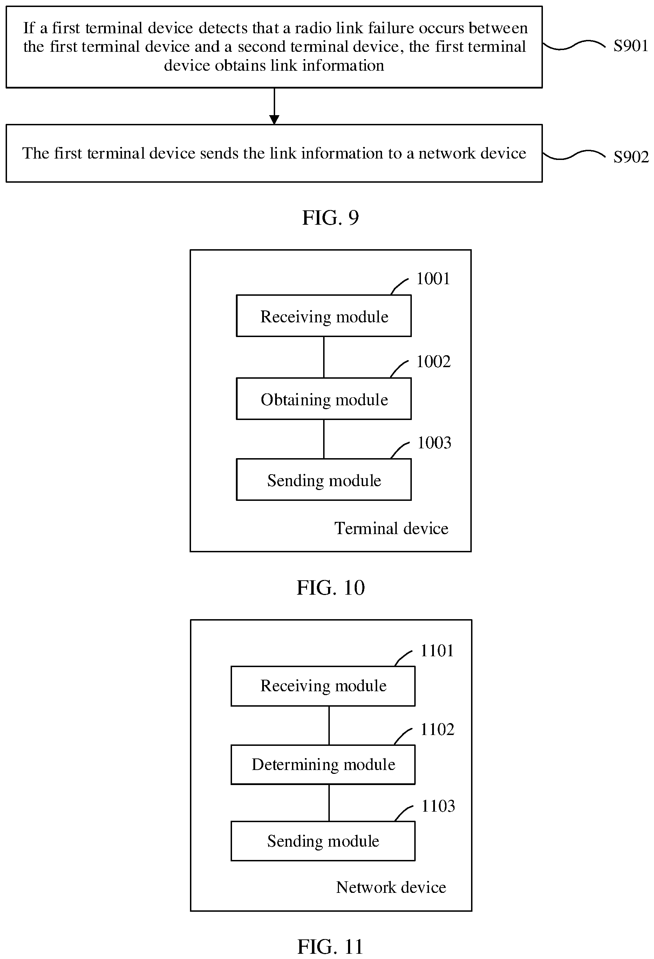

FIG. 9 is still another flowchart of a communication method according to an embodiment of this application. The communication method provided in this embodiment may be performed by a first terminal device. As shown in FIG. 9, the communication method provided in this embodiment may include the following steps.

S901: If the first terminal device detects that a radio link failure occurs between the first terminal device and a second terminal device, the first terminal device obtains link information.

S902: The first terminal device sends the link information to a network device.

Specifically, when the radio link failure occurs between the first terminal device and the second terminal device, the network device usually cannot obtain related information of the radio link failure, and cannot determine a reason why the radio link failure occurs. For example, the radio link failure may be caused by a long distance between the two terminal devices, or may be caused by an improper sidelink configuration of the two terminal devices, and the network device cannot learn of the reason of the radio link failure. The link information obtained when the radio link failure occurs between the first terminal device and the second terminal device is sent to the network device, so that a radio link failure problem can be located and analyzed. Therefore, the problem is further located and a communication network is optimized.

Optionally, the link information may include any one of the following groups:
a first transmit power and a first receive power, where the first transmit power is a power used by the first terminal device to send a signal, the first receive power is a power used by the first terminal device to receive a first signal, and the first signal is sent by the second terminal device;
a first transmit power and a second receive power, where the second receive power is a power used by the second terminal device to receive a second signal, the second signal is sent by the first terminal device, and the first terminal device may obtain the second receive power from the second terminal device, where for example, the second terminal device may send the second receive power to the first terminal device; and
a second transmit power and a first receive power, where the second transmit power is a power used by the second terminal device to send a signal, and the first terminal device may obtain the second transmit power from the second terminal device, where for example, the second terminal device may send the second transmit power to the first terminal device.

Because the power information may reflect a communication environment such as signal strength of a communication link, sending, to the network device, the power information when the radio link failure occurs between the first terminal device and the second terminal device helps locate and analyze the radio link failure problem.

Optionally, the link information may further include at least one of the following:
a moving speed of the first terminal device, a moving speed of the second terminal device, signal quality information of a cell in which the first terminal device is located, a cell identifier of the cell in which the first terminal device is located, location information (for example, GPS location information) of the first terminal device, and location information (for example, GPS location information) of the second terminal device.

An implementation of the signal quality information is not limited in this embodiment. For example, the signal quality information may include but is not limited to at least one of the following: a reference signal received power (reference signal received power, RSRP), reference signal received quality (reference signal received quality, RSRQ), and a signal to interference plus noise ratio (signal to interference plus noise ratio, SINR).

It should be noted that this embodiment may be combined with the embodiment shown in FIG. 7 or FIG. 8, and a combination manner is not limited in this embodiment.

FIG. 10 is a schematic diagram of a structure of a terminal device according to an embodiment of this application. The terminal device provided in this embodiment may perform the operations performed by the terminal device in the method embodiments of this application. As shown in FIG. 10, the terminal device provided in this embodiment may include:
a receiving module 1001, configured to receive second configuration information, where the second configuration information is used to indicate to obtain first information used for direct communication between the first terminal device and a second terminal device, and the first information includes at least one of the following: a service sending latency, a service sending throughput, a service receiving throughput, a sent service data amount, a received service data amount, a service data packet loss rate, or control information between the first terminal device and the second terminal device;
an obtaining module 1002, configured to obtain the first information; and
a sending module 1003, configured to send the first information to a network device.

Optionally, the second configuration information is further used to indicate a configuration parameter used when the first information is obtained, and the configuration parameter includes at least one of the following: a communication mode, a resource allocation mode, a measurement range, a connection status, a transmission status, a resource block, or a measurement periodicity, where
the communication mode includes unicast communication, groupcast communication, and broadcast communication;
the resource allocation mode is used to indicate a mode in which the terminal device obtains a communication resource;
the measurement range is used to indicate an area range in which the terminal device is located;
the connection status is used to indicate whether the terminal device remains connected to the network device;
the transmission status is used to indicate that the terminal device serves as a transmit end or a receive end during service transmission; and
the resource block is used to indicate a time-frequency resource used by the terminal device during the service transmission.

Optionally, the first information is specific to a broadcast service, and the sending module 1003 is further configured to:
send first indication information to the network device, where the first indication information is used to indicate a radio access technology used for the direct communication between the first terminal device and the second terminal device when the first terminal device obtains the first information.

Optionally, the first information includes current time information and/or current location information of the first terminal device.

Optionally, the obtaining module 1002 is further configured to obtain link information if it is detected that a radio link failure occurs between the first terminal device and the second terminal device; and
the sending module 1003 is further configured to send the link information to the network device.

Optionally, the link information includes any one of the following groups:
a first transmit power and a first receive power, where the first transmit power is a power used by the first terminal device to send a signal, the first receive power is a power used by the first terminal device to receive a first signal, and the first signal is sent by the second terminal device;
a first transmit power and a second receive power, where the second receive power is a power used by the second terminal device to receive a second signal, and the second signal is sent by the first terminal device; and
a second transmit power and a first receive power, where the second transmit power is a power used by the second terminal device to send a signal.

Optionally, the link information includes at least one of the following:
a moving speed of the first terminal device, a moving speed of the second terminal device, signal quality information of a cell in which the first terminal device is located, and a cell identifier of the cell in which the first terminal device is located.

Optionally, the receiving module 1001 is specifically configured to:
receive the second configuration information sent by the network device; or
receive the second configuration information sent by the second terminal device.

Optionally, the sending module 1003 is further configured to:
send third configuration information to the second terminal device, where the third configuration information is used to indicate the second terminal device to obtain the first information used for the direct communication between the two terminal devices.

Optionally, the sending module 1003 is specifically configured to:
if the connection status of the first terminal device is a connected state, send the first information to the network device; and
if the connection status of the first terminal device is an idle state, send the first information to the network device after accessing the network device.

Optionally, the sending module 1003 is specifically configured to send second indication information to the network device after accessing the network device, where the second indication information is used to indicate that the first terminal device has the first information;
the receiving module 1001 is specifically configured to receive reporting request information sent by the network device, where the reporting request information is used to request the first terminal device to send the first information to the network device; and
the sending module 1003 is specifically configured to send the first information to the network device.

The terminal device provided in this embodiment may perform the operations performed by the terminal device in the method embodiments of this application. A technical principle and a technical effect thereof are similar to those of the method, and details are not described herein again.

FIG. 11 is a schematic diagram of a structure of a network device according to an embodiment of this application. The network device provided in this embodiment may perform the operations performed by the first network device or the network device in the method embodiments of this application. As shown in FIG. 11, the network device provided in this embodiment may include:
a receiving module 1101, configured to receive first configuration information sent by a core network device or an operation, administration and maintenance OAM device, where the first configuration information is used to indicate to obtain first information used for direct communication between two terminal devices;
a determining module 1102, configured to determine a first terminal device based on the first configuration information; and
a sending module 1103, configured to send second configuration information to the first terminal device, where the second configuration information is used to indicate the first terminal device to obtain the first information used for the direct communication between the two terminal devices.

Optionally, the first information includes at least one of the following: a service sending latency, a service sending throughput, a service receiving throughput, a sent service data amount, a received service data amount, a service data packet loss rate, or control information between the first terminal device and a second terminal device.

Optionally, the first configuration information and/or the second configuration information is further used to indicate a configuration parameter used when the first information is obtained, and the configuration parameter includes at least one of the following: a communication mode, a resource allocation mode, a measurement range, a connection status, a transmission status, a resource block, and a measurement periodicity, where
the communication mode includes unicast communication, groupcast communication, and broadcast communication;
the resource allocation mode is used to indicate a mode in which the terminal device obtains a communication resource;
the measurement range is used to indicate an area range in which the terminal device is located;
the connection status is used to indicate whether the terminal device remains connected to the network device;
the transmission status is used to indicate that the terminal device serves as a transmit end or a receive end during service transmission; and
the resource block is used to indicate a time-frequency resource used by the terminal device during the service transmission.

The network device provided in this embodiment may perform the operations performed by the network device in the method embodiments of this application. A technical principle and a technical effect thereof are similar to those of the method, and details are not described herein again.

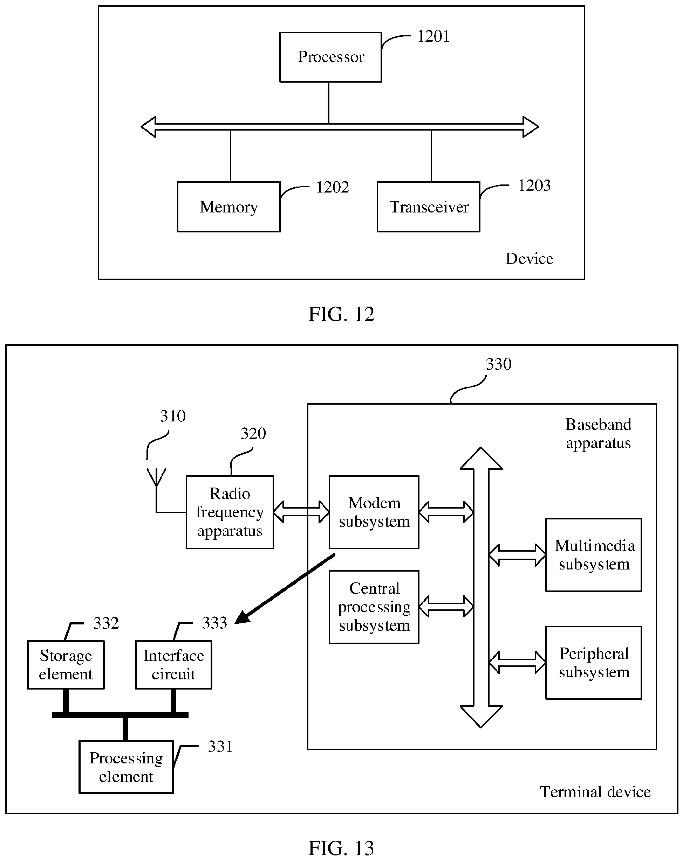

FIG. 12 is a schematic diagram of a structure of a device according to an embodiment of this application. As shown in FIG. 12, the device provided in this embodiment may include a processor 1201, a memory 1202, and a transceiver 1203. The transceiver 1203 is configured to receive or send data. The memory 1202 is configured to store instructions. The processor 1201 is configured to execute the instructions stored in the memory 1202 to perform the operations performed by the sending device or the receiving device in the method embodiments of this application. A technical principle and a technical effect thereof are similar to those of the device, and details are not described herein again.

It should be understood that the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, or may be any conventional processor or the like. The steps of the method disclosed with reference to embodiments of this application may be directly performed by a hardware processor, or may be performed by a combination of hardware and software modules in the processor.

In embodiments of this application, the memory may be a nonvolatile memory, such as a hard disk drive (hard disk drive, HDD) or a solid-state drive (solid-state drive, SSD), or may be a volatile memory (volatile memory), such as a random access memory (random access memory, RAM). The memory is any medium that can carry or store expected program code in a form of an instruction or a data structure and can be accessed by a computer, but is not limited thereto. The memory in this embodiment of this application may alternatively be a circuit or any other apparatus that can implement a storage function, and is configured to store program instructions and/or data.

FIG. 13 is a schematic diagram of another structure of a terminal device according to an embodiment of this application. The terminal device may be the terminal device in the foregoing embodiment, and may be configured to implement the operations of the terminal device in the foregoing embodiment.

As shown in FIG. 13, the terminal device includes an antenna 310, a radio frequency apparatus 320, and a baseband apparatus 330. The antenna 310 is connected to the radio frequency apparatus 320. In a downlink direction, the radio frequency apparatus 320 receives, through the antenna 310, information sent by a network device, and sends the information sent by the network device, to the baseband apparatus 330 for processing. In an uplink direction, the baseband apparatus 330 processes information of the terminal, and sends the information to the radio frequency apparatus 320. After processing the information of the terminal device, the radio frequency apparatus 320 sends the information to the network device through the antenna 310.

The baseband apparatus 330 may include a modem subsystem, configured to process data at each communication protocol layer. The baseband apparatus 330 may further include a central processing subsystem, configured to implement processing on an operating system and an application layer of the terminal device. In addition, the baseband apparatus 330 may further include another subsystem, for example, a multimedia subsystem or a peripheral subsystem. The multimedia subsystem is configured to control a camera, screen display, and the like of the terminal device. The peripheral subsystem is configured to implement a connection to another device. The modem subsystem may be a chip that is separately disposed. Optionally, the foregoing apparatus used for the terminal device may be located in the modem subsystem.

The modem subsystem may include one or more processing elements 331, for example, include a main control CPU and another integrated circuit. In addition, the modem subsystem may further include a storage element 332 and an interface circuit 333. The storage element 332 is configured to store data and a program. However, the program used to perform the method performed by the terminal device in the foregoing methods may not be stored in the storage element 332, but is stored in a memory outside the modem subsystem, and is loaded by the modem subsystem for use. The interface circuit 333 is configured to communicate with another subsystem. The foregoing apparatus used in the terminal device may be located in the modem subsystem, and the modem subsystem may be implemented by using a chip. The chip includes at least one processing element and an interface circuit. The processing element is configured to perform the steps of any one of the methods performed by the terminal device. The interface circuit is configured to communicate with another apparatus. In an implementation, units in the terminal device for implementing the steps in the foregoing methods may be implemented in a form of scheduling a program by a processing element. For example, the apparatus used for the terminal device includes a processing element and a storage element. The processing element invokes a program stored in the storage element, to perform the method performed by the terminal device in the foregoing method embodiment. The storage element may be a storage element located on a same chip as the processing element, namely, an on-chip storage element.

In another implementation, a program used to perform the method performed by the terminal device in the foregoing methods may be in a storage element that is on a different chip from the processing unit, namely, an off-chip storage element. In this case, the processing element invokes or loads the program from the off-chip storage element to the on-chip storage element, to invoke and perform the method performed by the terminal device in the foregoing method embodiment.

In still another implementation, the units of the terminal device that implement the steps in the foregoing method may be configured as one or more processing elements. The processing elements are disposed in the modem subsystem. The processing element herein may be an integrated circuit, for example, one or more ASICs, one or more DSPs, one or more FPGAs, or a combination of the types of integrated circuits. The integrated circuits may be integrated together to form a chip.

The units of the terminal device that implement the steps in the foregoing method may be integrated together, and implemented in a form of a system-on-a-chip (system-on-a-chip, SOC). The SOC chip is configured to implement the foregoing method. At least one processing element and storage element may be integrated into the chip, and the processing element invokes a program stored in the storage element to implement the foregoing method performed by the terminal device. Alternatively, at least one integrated circuit may be integrated into the chip, to implement the foregoing method performed by the terminal device. Alternatively, with reference to the foregoing implementations, functions of some units may be implemented by invoking a program by the processing element, and functions of some units may be implemented by the integrated circuit.

It can be learned that the foregoing apparatus used for the terminal device may include at least one processing element and an interface circuit. The at least one processing element is configured to perform any one of the methods that are provided in the foregoing method embodiments and performed by the terminal device. The processing element may perform some or all steps performed by the terminal device, in a first manner, to be specific, by invoking the program stored in the storage element; or may perform some or all steps performed by the terminal device, in a second manner, to be specific, by using a hardware integrated logic circuit in the processing element in combination with instructions; or may certainly perform, by combining the first manner and the second manner, some or all steps performed by the terminal device.

As described above, the processing element herein may be a general-purpose processor, for example, a CPU, or may be one or more integrated circuits, for example, one or more ASICs, one or more microprocessors DSPs, one or more FPGAs, or a combination of at least two of these types of integrated circuits, configured to implement the foregoing method.

The storage element may be one memory, or may be a general term of a plurality of storage elements.

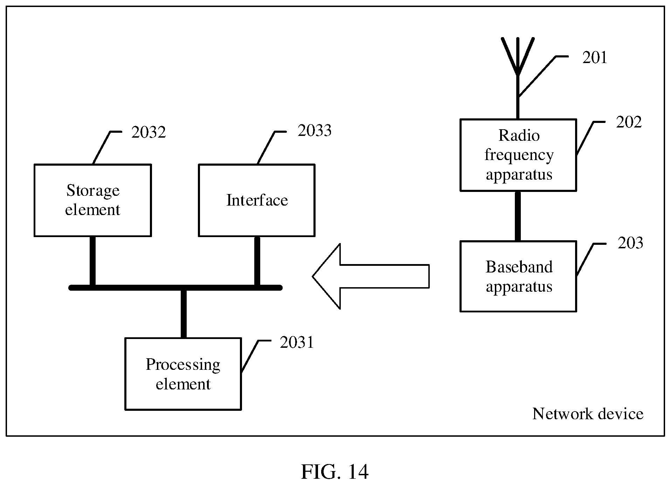

FIG. 14 is a schematic diagram of another structure of a network device according to an embodiment of this application. The network device may be the first network device or the network device in the foregoing embodiment, and is configured to implement related operations in the foregoing embodiment.

As shown in FIG. 14, the network device includes an antenna 201, a radio frequency apparatus 202, and a baseband apparatus 203. The antenna 201 is connected to the radio frequency apparatus 202. In an uplink direction, the radio frequency apparatus 202 receives, through the antenna 201, information sent by a terminal device, and sends the information sent by the terminal device, to the baseband apparatus 203 for processing. In a downlink direction, the baseband apparatus 203 processes information of the terminal device and sends the information to the radio frequency apparatus 202, and the radio frequency apparatus 202 processes the information of the terminal device and then sends the information to the terminal through the antenna 201.

The baseband apparatus 203 may include one or more processing elements 2031, for example, include a main control CPU and another integrated circuit. In addition, the baseband apparatus 203 may further include a storage element 2032 and an interface 2033. The storage element 2032 is configured to store a program and data. The interface 2033 is configured to exchange information with the radio frequency apparatus 202, and the interface is, for example, a common public radio interface (common public radio interface, CPRI). The foregoing apparatus used for the network device may be located in the baseband apparatus 203. For example, the foregoing apparatus used for the network device may be a chip in the baseband apparatus 203. The chip includes at least one processing element and an interface circuit. The processing element is configured to perform the steps of any method performed by the network device. The interface circuit is configured to communicate with another apparatus. In an implementation, units in the network device for implementing the steps in the foregoing methods may be implemented in a form of scheduling a program by the processing element. For example, the apparatus used for the network device includes a processing element and a storage element. The processing element invokes a program stored in the storage element, to perform the method performed by the network device in the foregoing method embodiments. The storage element may be a storage element that is located on a same chip as the processing element, namely, an on-chip storage element, or may be a storage element that is located on a different chip from the processing element, namely, an off-chip storage element.

In another implementation, units of the network device that implement the steps in the foregoing method may be configured as one or more processing elements. The processing elements are disposed in the baseband apparatus. The processing element herein may be an integrated circuit, for example, one or more ASICs, one or more DSPs, one or more FPGAs, or a combination of the types of integrated circuits. The integrated circuits may be integrated together to form a chip.

The units of the network device that implement the steps in the foregoing method may be integrated together, and implemented in a form of a system-on-a-chip (system-on-a-chip, SOC). For example, the baseband apparatus includes the SOC chip, configured to implement the foregoing method. At least one processing element and storage element may be integrated into the chip, and the processing element invokes a program stored in the storage element to implement the foregoing method performed by the network device. Alternatively, at least one integrated circuit may be integrated into the chip, to implement the foregoing method performed by the network device. Alternatively, with reference to the foregoing implementations, functions of some units may be implemented by invoking a program by the processing element, and functions of some units may be implemented by the integrated circuit.

It can be learned that the foregoing apparatus used for the network device may include at least one processing element and an interface circuit. The at least one processing element is configured to perform any one of the methods that are provided in the foregoing method embodiments and performed by the network device. The processing element may perform some or all steps performed by the network device in a first manner, to be specific, by invoking the program stored in the storage element; or may perform some or all steps performed by the network device in a second manner, to be specific, by using a hardware integrated logic circuit in the processing element in combination with instructions; or may certainly perform, by combining the first manner and the second manner, some or all steps performed by the network device.

As described above, the processing element herein may be a general-purpose processor, for example, a CPU, or may be one or more integrated circuits, for example, one or more ASICs, one or more microprocessors DSPs, one or more FPGAs, or a combination of at least two of these types of integrated circuits, configured to implement the foregoing method.

The storage element may be one memory, or may be a general term of a plurality of storage elements.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The available medium may be a magnetic medium (for example, a floppy disk, a hard disk, or a magnetic tape), an optical medium (for example, a DVD), a semiconductor medium (for example, a solid-state drive Solid-State Drive (SSD)), or the like.

## Claims

1. A communication method, comprising:
receiving, by a first terminal device, second configuration information, wherein the second configuration information is used to indicate to obtain first information used for direct communication between the first terminal device and a second terminal device, and the first information comprises at least one of the following: a service sending latency, a service sending throughput, a service receiving throughput, a sent service data amount, a received service data amount, a service data packet loss rate, or control information between the first terminal device and the second terminal device;
obtaining, by the first terminal device, the first information; and
sending, by the first terminal device, the first information to a network device.

2. The method according to claim 1, wherein the second configuration information is further used to indicate a configuration parameter used when the first information is obtained, and the configuration parameter comprises at least one of the following: a communication mode, a resource allocation mode, a measurement range, a connection status, a transmission status, a resource block, or a measurement periodicity, wherein
the communication mode comprises unicast communication, groupcast communication, and broadcast communication;
the resource allocation mode is used to indicate a mode in which the terminal device obtains a communication resource;
the measurement range is used to indicate an area range in which the terminal device is located;
the connection status is used to indicate whether the terminal device remains connected to the network device;
the transmission status is used to indicate that the terminal device serves as a transmit end or a receive end during service transmission; and
the resource block is used to indicate a time-frequency resource used by the terminal device during the service transmission.

3. The method according to claim 1 or 2, wherein the first information is specific to a broadcast service, and the method further comprises:
sending, by the first terminal device, first indication information to the network device, wherein the first indication information is used to indicate a radio access technology used for the direct communication between the first terminal device and the second terminal device when the first terminal device obtains the first information.

4. The method according to claim 1 or 2, wherein the first information comprises current time information and/or current location information of the first terminal device.

5. The method according to claim 1 or 2, wherein the method further comprises:
obtaining, by the first terminal device, link information if the first terminal device detects that a radio link failure occurs between the first terminal device and the second terminal device; and
sending, by the first terminal device, the link information to the network device.

6. The method according to claim 5, wherein the link information comprises any one of the following groups:
a first transmit power and a first receive power, wherein the first transmit power is a power used by the first terminal device to send a signal, the first receive power is a power used by the first terminal device to receive a first signal, and the first signal is sent by the second terminal device;
a first transmit power and a second receive power, wherein the second receive power is a power used by the second terminal device to receive a second signal, and the second signal is sent by the first terminal device; and
a second transmit power and a first receive power, wherein the second transmit power is a power used by the second terminal device to send a signal.

7. The method according to claim 5, wherein the link information comprises at least one of the following:
a moving speed of the first terminal device, a moving speed of the second terminal device, signal quality information of a cell in which the first terminal device is located, and a cell identifier of the cell in which the first terminal device is located.

8. The method according to claim 1 or 2, wherein the receiving, by a first terminal device, second configuration information comprises:
receiving, by the first terminal device, the second configuration information sent by the network device; or
receiving, by the first terminal device, the second configuration information sent by the second terminal device.

9. The method according to claim 1 or 2, wherein the method further comprises:
sending, by the first terminal device, third configuration information to the second terminal device, wherein the third configuration information is used to indicate to obtain the first information used for the direct communication between the two terminal devices.

10. The method according to claim 1 or 2, wherein the sending, by the first terminal device, the first information to a network device comprises:
if the connection status of the first terminal device is a connected state, sending, by the first terminal device, the first information to the network device; and
if the connection status of the first terminal device is an idle state, sending, by the first terminal device, the first information to the network device after accessing the network device.

11. The method according to claim 10, wherein the sending, by the first terminal device, the first information to the network device after accessing the network device comprises:
sending, by the first terminal device, second indication information to the network device after accessing the network device, wherein the second indication information is used to indicate that the first terminal device has the first information;
receiving, by the first terminal device, reporting request information sent by the network device, wherein the reporting request information is used to request the first terminal device to send the first information to the network device; and
sending, by the first terminal device, the first information to the network device.

12. A communication method, comprising:
receiving, by a network device, first configuration information sent by a core network device or an operation, administration and maintenance OAM device, wherein the first configuration information is used to indicate to obtain first information used for direct communication between two terminal devices;
determining, by the network device, a first terminal device based on the first configuration information; and
sending, by the network device, second configuration information to the first terminal device, wherein the second configuration information is used to indicate the first terminal device to obtain the first information used for the direct communication between the two terminal devices.

13. The method according to claim 12, wherein the first information comprises at least one of the following: a service sending latency, a service sending throughput, a service receiving throughput, a sent service data amount, a received service data amount, a service data packet loss rate, or control information between the first terminal device and a second terminal device.

14. The method according to claim 12 or 13, wherein the first configuration information and/or the second configuration information are/is further used to indicate a configuration parameter used when the first information is obtained, and the configuration parameter comprises at least one of the following: a communication mode, a resource allocation mode, a measurement range, a connection status, a transmission status, a resource block, and a measurement periodicity, wherein
the communication mode comprises unicast communication, groupcast communication, and broadcast communication;
the resource allocation mode is used to indicate a mode in which the terminal device obtains a communication resource;
the measurement range is used to indicate an area range in which the terminal device is located;
the connection status is used to indicate whether the terminal device remains connected to the network device;
the transmission status is used to indicate that the terminal device serves as a transmit end or a receive end during service transmission; and
the resource block is used to indicate a time-frequency resource used by the terminal device during the service transmission.

15. A terminal device, serving as a first terminal device and comprising:
a receiving module, configured to receive second configuration information, wherein the second configuration information is used to indicate to obtain first information used for direct communication between the first terminal device and a second terminal device, and the first information comprises at least one of the following: a service sending latency, a service sending throughput, a service receiving throughput, a sent service data amount, a received service data amount, a service data packet loss rate, or control information between the first terminal device and the second terminal device;
an obtaining module, configured to obtain the first information; and
a sending module, configured to send the first information to a network device.

16. The terminal device according to claim 15, wherein the second configuration information is further used to indicate a configuration parameter used when the first information is obtained, and the configuration parameter comprises at least one of the following: a communication mode, a resource allocation mode, a measurement range, a connection status, a transmission status, a resource block, or a measurement periodicity, wherein
the communication mode comprises unicast communication, groupcast communication, and broadcast communication;
the resource allocation mode is used to indicate a mode in which the terminal device obtains a communication resource;
the measurement range is used to indicate an area range in which the terminal device is located;
the connection status is used to indicate whether the terminal device remains connected to the network device;
the transmission status is used to indicate that the terminal device serves as a transmit end or a receive end during service transmission; and
the resource block is used to indicate a time-frequency resource used by the terminal device during the service transmission.

17. The terminal device according to claim 15 or 16, wherein the first information is specific to a broadcast service, and the sending module is further configured to:
send first indication information to the network device, wherein the first indication information is used to indicate a radio access technology used for the direct communication between the first terminal device and the second terminal device when the first terminal device obtains the first information.

18. The terminal device according to claim 15 or 16, wherein the first information comprises current time information and/or current location information of the first terminal device.

19. The terminal device according to claim 15 or 16, wherein
the obtaining module is further configured to obtain link information if it is detected that a radio link failure occurs between the first terminal device and the second terminal device; and
the sending module is further configured to send the link information to the network device.

20. The terminal device according to claim 19, wherein the link information comprises any one of the following groups:
a first transmit power and a first receive power, wherein the first transmit power is a power used by the first terminal device to send a signal, the first receive power is a power used by the first terminal device to receive a first signal, and the first signal is sent by the second terminal device;
a first transmit power and a second receive power, wherein the second receive power is a power used by the second terminal device to receive a second signal, and the second signal is sent by the first terminal device; and
a second transmit power and a first receive power, wherein the second transmit power is a power used by the second terminal device to send a signal.

21. The terminal device according to claim 19, wherein the link information comprises at least one of the following:
a moving speed of the first terminal device, a moving speed of the second terminal device, signal quality information of a cell in which the first terminal device is located, and a cell identifier of the cell in which the first terminal device is located.

22. The terminal device according to claim 15 or 16, wherein the receiving module is specifically configured to:
receive the second configuration information sent by the network device; or
receive the second configuration information sent by the second terminal device.

23. The terminal device according to claim 15 or 16, wherein the sending module is further configured to:
send third configuration information to the second terminal device, wherein the third configuration information is used to indicate to obtain the first information used for the direct communication between the two terminal devices.

24. The terminal device according to claim 15 or 16, wherein the sending module is specifically configured to:
if the connection status of the first terminal device is a connected state, send the first information to the network device; and
if the connection status of the first terminal device is an idle state, send the first information to the network device after accessing the network device.

25. The terminal device according to claim 24, wherein
the sending module is specifically configured to send second indication information to the network device after accessing the network device, wherein the second indication information is used to indicate that the first terminal device has the first information;
the receiving module is specifically configured to receive reporting request information sent by the network device, wherein the reporting request information is used to request the first terminal device to send the first information to the network device; and
the sending module is specifically configured to send the first information to the network device.

26. A network device, comprising:
a receiving module, configured to receive first configuration information sent by a core network device or an operation, administration and maintenance OAM device, wherein the first configuration information is used to indicate to obtain first information used for direct communication between two terminal devices;
a determining module, configured to determine a first terminal device based on the first configuration information; and
a sending module, configured to send second configuration information to the first terminal device, wherein the second configuration information is used to indicate the first terminal device to obtain the first information used for the direct communication between the two terminal devices.

27. The network device according to claim 26, wherein the first information comprises at least one of the following: a service sending latency, a service sending throughput, a service receiving throughput, a sent service data amount, a received service data amount, a service data packet loss rate, or control information between the first terminal device and a second terminal device.

28. The network device according to claim 26 or 27, wherein the first configuration information and/or the second configuration information are/is further used to indicate a configuration parameter used when the first information is obtained, and the configuration parameter comprises at least one of the following: a communication mode, a resource allocation mode, a measurement range, a connection status, a transmission status, a resource block, and a measurement periodicity, wherein
the communication mode comprises unicast communication, groupcast communication, and broadcast communication;
the resource allocation mode is used to indicate a mode in which the terminal device obtains a communication resource;
the measurement range is used to indicate an area range in which the terminal device is located;
the connection status is used to indicate whether the terminal device remains connected to the network device;
the transmission status is used to indicate that the terminal device serves as a transmit end or a receive end during service transmission; and
the resource block is used to indicate a time-frequency resource used by the terminal device during the service transmission.

29. A device, comprising a processor, a memory, and a transceiver, wherein the processor is configured to invoke a program stored in the memory, to perform the communication method according to any one of claims 1 to 14.

30. A computer-readable storage medium, wherein the computer-readable storage medium stores instructions; and when the instructions are run a computer or a processor, the communication method according to any one of claims 1 to 14 is implemented.
